# EUROPEAN PATENT APPLICATION

(11) **EP 2 927 884 A1**
(43) Date of publication of application: **07.10.2015**
(21) Application number: 14163029.3
(22) Date of filing: 01.04.2014
(51) Int. Cl.: G07F 17/12, G06Q 10/02

(54) **Method of reserving compartments**

(71) Applicant: Integer.pl S.A., 30-624 Krakow (PL)
(72) Inventor: Gruca, Krzysztof, 30-611 Kraków (PL); Milewski, Karol, 03-982 Warszawa (PL)
(74) Representative: Kilchert, Jochen

(57) **Abstract**

Provided is a method and a system for reserving one or more compartments (8) of a post system (1). The method comprises storing a reservation table with data indicating statuses of a plurality of compartments (8) and receiving reservation information indicating a number of compartments (8) to be reserved. At least one available compartment (8) to be reserved is identified using the reservation table, and the status thereof updated to reserved including assigning a reservation time to establish a compartment reservation. At least one record within the reservation table associated with a reserved compartment (8) having a reservation time that is past a current time is identified, and the record is updated to available.

## Description

The present invention relates to a method, a computer readable device comprising instructions to perform the method, and a system for reserving compartments for receiving packages.

In many existing systems, the transfer of packages or parcels from a shop or business to an end customer requires collaboration between the shop or business and a courier. Traditionally, if a shop or business wishes to transfer a package, the shop or business communicates with a courier agency, or sometimes even the courier directly, in order to arrange a collection time; that is, a time for the courier to arrive at the location of the shop or business and collect the package.

Such existing schemes have several drawbacks. Firstly, employees of the shop or business must be present during the collection period, so as to enable the courier to collect the correct package or the like. This may be inconvenient if the courier cannot reach the shop or business in time for the close of business, thus meaning that the package cannot be collected until the following day. For urgent packages requiring next-day delivery, this can place considerable pressure on the courier and/or shop the following day.

Secondly, shops or businesses usually keep the goods or packages on the premises, meaning that a courier has to visit the shop or business directly in order to collect the package. Not only does this result in an increase in fuel consumption and emissions via the increased distance that the courier must drive, but also an increase in the time that a courier spends in a stationary state collecting the packages.

A need exists, therefore, for a centralised collection point for a courier, such that the time and effort required to collect packages is greatly improved.

In DE 10 301 137 A1 a normal method for sending and receiving packages is described, primarily via compartments of a post box terminal.

In some cases, however, the need exists for a shop or business to reserve compartments, thereby guaranteeing that the package can be deposited in the compartment and collected in a time efficient and effective manner. This enables a business to reserve compartments on an "as needed" basis, which may be particularly appropriate for smaller business that may not be required to send packages on a regular basis, thus having a "permanent" reservation is undesirable.

Therefore, a dynamic reservation system that can reserve compartments on a request basis is required. Also required is a system that enables flexibility between reserved compartments and available space of the compartments, so as to maximise storing efficiency. There also exists a need to reduce the processing burden on a post system while further reducing the volume of data required to be searched.

The problem is solved by a method for the reserving of one or more compartments of a post system, the method comprising the steps of;
- storing, in a database of the post system, a reservation table with data indicating statuses of a plurality of compartments;
- receiving reservation information, the reservation information indicating a number of compartments to be reserved;
- identifying at least one available compartment to be reserved using the reservation table;
- updating the reservation table by storing data indicating a reserved status associated with the at least one available compartment to be reserved and a reservation time to establish a compartment reservation; and
- identifying at least one record within the reservation table associated with a reserved compartment having a reservation time that is past a current time, and updating the record of the reservation table corresponding to the identified reserved compartment to available.

The post system described above is adapted to update a reservation table stored in a database, wherein the reservation table includes data indicating a current status of a compartment of the post system. The current status can include any number of statuses, but is preferably selected from one of "stored", "available", and "reserved". A "reserved" status indicates that a compartment of the post system is reserved for use at a later time.

The reservation table also includes data indicating a reservation time for which the compartment reservation is valid for. In other words, the reservation time signifies a period of time over which the compartment is guaranteed to be available to a person who reserves the compartment. In many cases, this will be the employee of a shop system or a sender of the package, herein sender. The reservation time may be a period of time starting from the reception of a request for the reservation or from a point defined later in time. Equally, the reservation time may be a fixed, predefined time applied to all reservations of a certain type, or may be adjusted per reservation depending upon the type of reservation. The reservation time is not particularly limited to any duration, and may be a relatively short time of several hours, or a relatively long time of several weeks/months.

In one embodiment, the reservation time may be the time for which a compartment is empty in addition to eh time in which a package is stored therein. For example, a reservation time may be set to two hours. This enables the sender to place the package within the compartment within the two hours, at any time, but after the two hours the compartment is set to "available" even if a package is deposited within the compartment. This may be useful when a courier makes a regular visit to the compartments particularly at the end of the reservation time. In some cases, the compartment may be updated to "available and return", meaning that the compartment is available but contains a package to be returned to the sender.

The post system as described above also provides an automatic update of the status of the compartment, in particular when the reservation time has expired, i.e., when the reservation time indicates a point earlier in time than the current time. In some embodiments, the data may be communicated between several databases in order to provide a fail-safe storage of the data, i.e., the data is replicated on several databases. In some embodiments, this may be realised via the use of circuit switched data calls which may be initiated by a post box terminal or server thereof, or a central server of the post system. The circuit switched data calls enable allocated periods of communication in a certain communication frame, such that one post box terminal or compartment may be allocated a part of the frame and send data within that part of the frame.

Automatically updating the reservation table ensures that maximum efficiency is obtained with regards to unused storage space. In other words, the instant that a reservation expires, or a short time thereafter, the compartment is made available. Accordingly, the compartment is present in any search performed by the post system, i.e., when searching and identifying available compartments. Moreover, the automatic updating enables very few messages to be communicated between compartments themselves, or communication means located proximate thereto, and the post system or server of the post system. Hence, an efficient system is realised in both compartment availability and reduced communication bandwidth.

A further embodiment comprises receiving identification information at the reserved compartment, the identification information being associated with a customer. The method further compares the received identification information with pre-stored identification information, and allows access to the reserved compartment if the received identification information matches the pre-stored identification information.

Receiving identification information allows a user depositing a package to be verified as the correct or authorised person when depositing the package. The identification information is not particularly limited and may be information related to the sender or information related to the shop or business that the sender is employed by. In some embodiments, the identification information is a generated code sent to the sender either upon confirmation of the reservation or upon the sender initiating a completion routine for the reservation, i.e., attempting to deposit a package. In addition, the identification information can trigger a response to indicate that the reservation has been successfully utilised. In other words, entry of the identification information can signify that a package has been stored in the reserved compartment within the reservation time.

The means for receiving the identification information are not particularly limited. In one embodiment, the means are a user interface, such as a keypad and display, located at a post box terminal, wherein the post box terminal typically comprises a number of the compartments. The sender may interact with the user interface located at the post box terminal and trigger access to the compartment by, for example, actuating a locking means of the compartment door.

In yet another embodiment, the identifying at least one record further includes comparing the reservation time with the current time and data from a recognition means, the recognition means provided at the one or more compartments and adapted to recognise if a package is deposited in a compartment. In this case, the record corresponding to the reserved compartment is updated to available if the recognition means do not detect that a package has been deposited in the reserved compartment within the reservation time.

Recognition means may be deposited at the compartment or the post box terminal. The recognition means is not particularly limited to any specific component or software configuration. In one embodiment, the recognition means is a sensor adapted to detect the opening of the door to the compartment, or the actuation of actuation means controlling the door. Alternatively, or additionally, the recognition means may include a light beam sensor located in the compartment such that, when a light beam is broken by the presence of a package, the recognition means detects that a package is deposited therein. In some further arrangements, the recognition means may be the user interface of the post box terminal.

If no package is detected within the reservation time, i.e., if the current time is greater than the reservation time and a package is not detected, then the post system is adapted to automatically update the record associated with the compartment to available. Providing the recognition means enables the advantage of identifying, at the post box terminal or compartment, when a reservation has not been utilised.

Identifying at least one record may further include comparing the reservation time with the current time and data from the recognition means, wherein the record corresponding to the reserved compartment is updated to stored if the recognition means detect that a package has been deposited in the reserved compartment within the reservation time.

In this scenario, if a package is detected in the compartment during the reservation time, the record associated with the compartment is updated to "stored". This may either occur instantaneously, i.e., when a package is deposited within the compartment, or when the reservation time is deemed to be expired. In other words, the reservation status may be present for the entire duration of the reservation time, and an assessment as to whether or not the reservation is fulfilled is made at the end of the period. This may help ease any processing burden on the post system, as a routine acquisition of data from the recognition means only needs to be performed once.

According to a further embodiment, receiving the reservation information further includes receiving customer account information related to a customer account pre-registered with the post system. The customer account information may include data related to at least one geographical location, and the identifying at least one available compartment to be reserved may further include identifying the at least one available compartment on the basis of the geographical location. When a customer or sender submits reservation information to the post system, e.g., a number of compartments to be reserved, the reservation information may include some form of identification related to an account of the sender or shop system that the sender may be authorised to used. An account may be pre-registered with the post system before any postal transactions may be performed. The account may include data relating to any monetary transactions that may be required to be performed, i.e., bank details of the sender and/or shop system.

The customer information may be stored at the database mentioned previously, or at an alternative database associated with the post system. In addition, the account information preferably includes location data indicative of at least one location associated with the shop system or sender. The post system may then provide reservations on the basis of this location data. This may include providing compartment reservations a predefined distance from the location. The predefined distance may be a fixed distance or may be specified by the sender or the account information.

In this regard, the account may have several registered locations associated therewith, and the post system may provide compartment reservations at one of the locations. For example, two locations may be given as those of two, identical warehouses (i.e., same stock requirements), and thus it is irrelevant as to which one of the two warehouses the stock/package is sent from.

Providing reservations based upon location data is beneficial for both the sender and the post system. For the post system, the number of data entries in the reservation table to be searched may be severely reduced; in one embodiment, the availability of the compartments are searched in order based upon a distance from the location data. For the sender, a compartment located close by is beneficial given the time required to travel to the compartment and deposit the package therein.

Additionally, or alternatively, receiving the reservation information further includes receiving a size of one or more packages to be stored in the compartments, wherein the identifying at least one available compartment to be reserved further includes identifying at least one available compartment on the basis of the size of the one or more packages.

In many cases, the compartments provided at the post box terminal will be of different sizes, and thus able to accommodate different sized packages. Providing size information with the reservation information means that the post system may effectively manage the compartments such that, for example, a small-sized package is preferably not deposited in a large size compartment. In some cases, however, this may be necessary on the basis of the distance requirements, i.e., the closest available compartment is a large compartment.

According to a further embodiment, the method further includes the step of:
- transmitting a prioritised list of available compartments based upon the location data indicating at least one location of the shop or warehouse received from the shop system, wherein the reservation information includes an indication of a number of compartments to be reserved from the list of prioritised available compartments.

In this embodiment, a sender is given some freedom in deciding the compartments to be reserved. Prior to any reservation being made, the post system may send a list of available compartments based upon different search parameters. Preferentially, the list is provided in terms of the distance from the location data, i.e., closest available compartments are provided at the top of the list. In some cases, the list may be arranged further according to the correlation between the compartment/package sizes.

With such a list, the sender may select one or more compartments on the basis of convenience; for example, four packages to be deposited in four different post box terminals may be less convenient than depositing all four in a single terminal located further from the location specified by the location data. Providing such a list may result in fewer communications being exchanged between the shop system and the post system, thereby reducing both processing requirements and bandwidth availability.

In an alternative arrangement, the post system may be adapted to prioritise the list according to a "best match", which may include rating the available compartments on a distance, size, number and size of packages to be deposited, or a preferred mode of transport of the sender.

Preferably, the method further includes:
- receiving a query message, the query message including the location data related to at least one location associated with the location of the shop and/or warehouse; and
- transmitting the prioritised list of available compartments in response to the query message.

Prior to transmitting the list mentioned previously, the shop system or sender may submit a query message to the post system. The query message may include the location data or simply an indication of the customer account which in turn comprises the location information. In this case, the number of compartments to be reserved may not be communicated until the list is transmitted to the shop system, which reduces the number of communications and thus bandwidth utilised, between the shop system and the post system.

In yet a further embodiment, the prioritised list of available compartments is generated according to a predefined range from the location of the shop and/or warehouse, and if no compartment is available within the predefined range, a message is transmitted indicating either; alternative available compartments outside the predefined range, or an alternative reservation time at which compartments within the predefined range are available.

In this configuration, the prioritised list is preferentially sent only including the available compartments within a predefined distance range. This enables less data to be processed by the post system and the shop system, resulting in a much more efficient process and a reduced volume of data communicated between the two systems.

In some situations, there may not be any available compartments within the specified range. The post system may then send a message to the sender system indicating such a situation. In some preferred embodiments, the message may contain an indication of available compartments that are outside the predefined range, i.e., available compartments that are within a distance range of the location plus a predefined additional distance. For example, the distance range may be set to 1 km, and the additional distance may be set to 1 km, thus the message would show available compartments within a 2 km radius.

Additionally, or alternatively, the message may include an indication of an alternative reservation time. For example, a compartment may be reserved from 1:00 pm to 2:00 pm, and the reservation request is made from 1:45 pm to 2:45 pm. The message may indicate that the reservation of the compartment expires and that it may be possible to reserve this compartment from 2:00 pm onwards. The shop system or sender may then request an alert be set for this compartment. The alert may signify that either the reservation is fulfilled, i.e., a package is stored therein and thus cannot be used, or that the compartment is available. In some cases, it may be preferential to monitor, i.e., provide alerts for, several compartments

In an alternative or additional embodiment, the post system further comprises at least one post box terminal comprising a plurality of compartments, and wherein the updating the reservation table includes storing data indicating a reserved status associated with an arbitrary available compartment of the plurality of compartments, such that any of the available compartments of one post box terminal may be assigned the compartment reservation.

In this embodiment, a specific compartment is not reserved; rather, a compartment of a specific post box terminal is reserved. Indeed, the sender or shop system may not require information on the exact compartment that is reserved, merely that a reservation for a compartment at a particular post box terminal is made.

With such an arrangement, the post system may actively manage the reservations depending upon compartment availability of the post box terminal. This may also be particularly useful when the size of the compartments and packages are taken into consideration. For example, suppose a medium sized package is to be stored in a post box terminal at a certain location. The reservation is made accordingly. At the time of the reservation being made, the post box terminal may have A compartments of a small size available, B compartments of a medium size available, and C compartments of large size available.

At a point later in time, suppose one medium and one large compartment are still available, and the sender has yet to deposit the package at the post box terminal. A second sender, i.e., a sender with a second reservation or a sender approaching the post box terminal without a reservation, may also deposit a medium sized package at the medium compartment. At that point, the reservation is assigned to the large compartment, thus providing a guarantee that a compartment is reserved for the first sender. However, should the reservation not be fulfilled, the method prevents medium sized packages being stored in large sized compartments while the medium sized compartment is empty or available. In other words, the storage space of the post box terminal is effectively managed such that, preferentially, the size of the compartment matches the size of the package.

The aforementioned problem is also solved by a system for reserving one or more compartments, the system comprising:
- a database adapted to store a reservation table including data indicating statuses of a plurality of compartments;
- and a post system in communication with the database and including a plurality of compartments, the post system adapted to receive reservation information indicating a number of compartments to be reserved,
wherein the post system is adapted to identify at least one available compartment to be reserved using the reservation table stored at the database, and update the reservation table by storing data indicating a reserved status associated with the at least one available compartment to be reserved and a reservation time to establish a compartment reservation; and
wherein the post system adapted to identify at least one record within the reservation table of the database associated with a reserved compartment having a reservation time that is past a current time, and to update the record of the reservation table corresponding to the identified reserved compartment to available.

Preferably, the plurality of compartments are adapted to receive identification information, the identification information associated with a customer, and enable access to the compartment if the received identification information matches pre-stored identification information.

In a further embodiment, the system further comprises recognition means, the recognition means provided at the one or more compartments and adapted to recognise if a package is deposited in a compartment, wherein the post system is adapted to update the record corresponding to the reserved compartment to available if the recognition means do not detect that a package has been deposited in the reserved compartment within the reservation time.

In yet a further embodiment, the post system further comprises at least one post box terminal, each post box terminal comprising a number of the one or more compartments, and wherein the database comprises a plurality of local databases such that at least one or more post box terminals are provided with a local database, the local database storing a reservation table with data indicating statuses of the compartments of the one or more post box terminals.

In this arrangement, the post system comprises local databases that are present at the post box terminals, or proximately thereto. Not every post box terminal may be supplied with its own local database, and a local database may store data and reservation tables on any number of post box terminals. Providing local databases, however, enables the post system to provide a hierarchical data relationship.

In one embodiment, this may improve any searching procedure that is to be carried out. For example, a main database may contain a list of terminal numbers and locations. Once a location is identified, the post system may search the local database corresponding to that particular post box terminal location. This means that the post system is provided with less data to search per search procedure. In an alternative embodiment, a local database may communicate with a main database, via an intermediate server and/or main server, in order to replicate stored data. That is, the status of the compartments may be stored locally and centrally. In particular, the status of the compartments may be monitored locally and periodically updated to a main or central database. Such a system enables data to be stored in a fail-safe manner and, in some cases, the communications between databases may be exchanged using circuit switched data calls.

The problem is further solved by a computer readable device comprising instructions that, when executed, perform the method of any of the methods described above.

These and other aspects of the invention will be apparent from and elucidated with reference to the embodiments described hereinafter.

In the following drawings:
- Fig. 1 shows an exemplary system employing components of the present invention;
- Fig. 2A shows an exemplary reservation table;
- Fig. 2B shows an exemplary identification table including terminal locations;
- Fig. 2C shows an exemplary reservation table including compartment statuses to be used with the exemplary identification table of Fig. 2B;
- Fig. 3 shows a second exemplary system employing components of the present invention;
- Fig. 4 shows an exemplary method for reserving compartments;
- Fig. 5 shows a second exemplary method for reserving compartments;
- Fig. 6A shows an exemplary reservation table including size of compartments available;
- Fig. 6B shows an exemplary reservation table including compartment statuses; and
- Fig. 6C shows an exemplary pending reservation table.

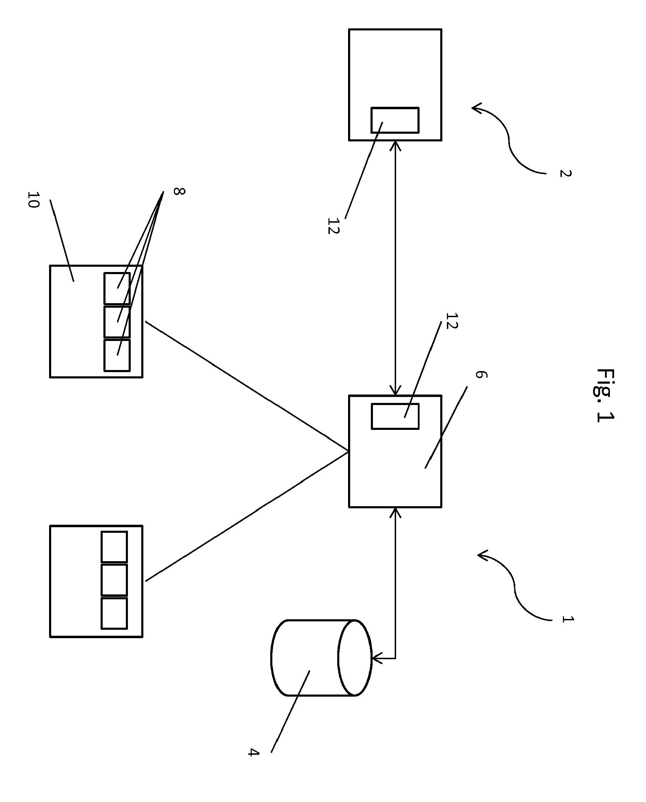

Fig. 1 shows an exemplary post system 1 employing the principles of the present invention. The post system 1 generally comprises a database 4 and some data processing means. In Fig. 1, the data processing means is given as a server 6, but the data processing means may be any suitable form of data processing means, such as a personal computer including a processor. The post system 1 is also provided with a plurality of compartments 8 which are suitable for storing packages therein. In some embodiments, the compartments 8 are distributed over a number of post box terminals 10.

A shop system 2 may also be provided which may interact with the post system 1. In other words, the shop system 2 may communicate a desired number of compartments 8 to be reserved to the post system 1, and the post system 1 is adapted to receive and process that communication. While only one shop system 2 is shown in Fig. 1, it should be appreciated that multiple shop systems 2 may interact with the post system 1. Both of the shop system 2 and the post system 1 may be provided with communication modules 12 in order to effectuate communications between the two. In some cases, the communication may be a secure communication, particularly when sensitive data is to be transmitted. In other cases, the communications may be made using circuit switched data calls thus enabling the communications to be sent in a fail-safe manner.

The shop system 2 is generally described herein as a shop or business that sells or transports goods and/or packages. In one arrangement, the shop system 2 may be an IT based system, such as a number of personal computers. The shop system 2 may be located at a shop or warehouse associated with the shop system 2, or it may be remotely located. Alternatively, the shop system 2 may be a telephony system or any other communication system. The present invention, however, is not limited to this interpretation, and the shop system 2 may be replaced by a member of the general public. For example, a person wishing to return a damage or unwanted package may also interact with the post system 1 to reserve a compartment 8.

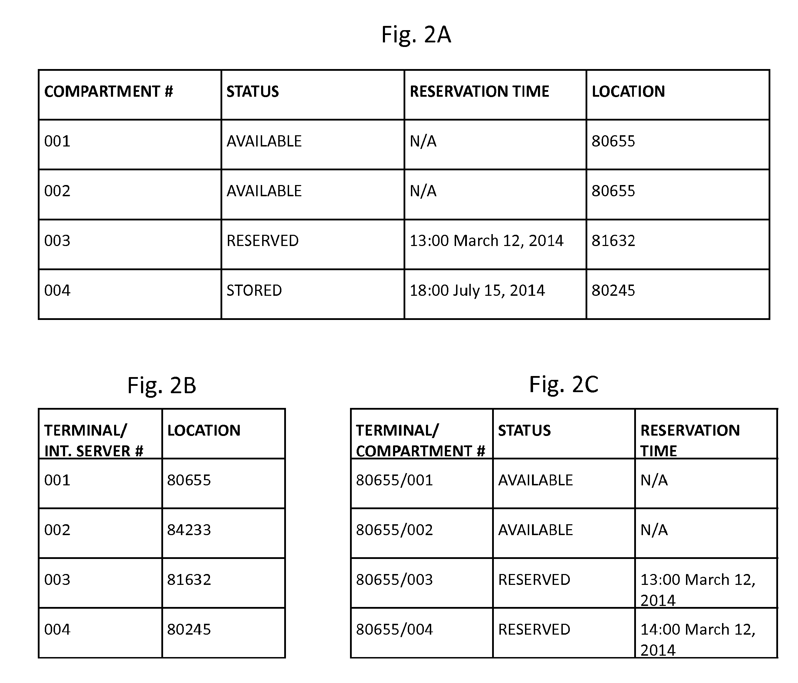

In accordance with the present invention, the database 4 stores a reservation table. The reservation table is a table containing data indicative of a current status of one or more compartments 8. Fig. 2A shows an example layout of the reservation table. An identification column may be provided wherein a compartment number or general identifier is assigned to each compartment 8, thereby providing identification of the compartments 8. In addition, a status column may be provided indicating the current status of the compartment 8. The compartment status may take any number of statuses depending upon the condition of the compartment 8 and the scheme used. However, preferably, the compartment status may be at least one of "stored", "available", and "reserved".

A "stored" status may indicate that a package is currently stored in the compartment 8. This may be any kind of package, as in the package may have passed through the reservation method discussed below, or may be deposited according to some alternative scheme. An "available" status may indicate that the compartment 8 currently does not have a package located therein and is also not "reserved".

The "reserved" status may indicate that a compartment 8 is currently reserved, but does not have a package stored therein. In other words, the reserved status indicates an available compartment 8 that has been selected to receive a package at a later point in time.

To prevent the misuse of the reservation of compartments 8, the "reservation" status is also associated with a reservation time. The reservation time is also stored in the reservation table along with the "reserved" status. The reservation time essentially indicates a time duration for which the reservation is valid or applicable. This can be any kind of reservation time depending upon the scheme employed.

In one embodiment, the reservation time is a predetermined time from the moment of requesting the reservation. For example, suppose the predetermined time is two hours, a shop system 2 may request a reservation at 11.00 am, meaning that the reservation will expire, i.e., the compartment 8 will no longer be reserved, after 1.00 pm. Alternatively, the reservation time may be between two points in the future. For example, again suppose the reservation time is two hours and a shop system 2 requests the reservation at 11.00 am, the reservation time may be for a period between 1.00 pm and 3.00 pm.

The duration of the reservation time is not particularly limited and may be a short period of several hours, to a prolonged period of several weeks or several months. Moreover, the reservation time may be a fixed time, i.e., always two hours, or may be a variable time that can be selected by the shop system 2.

Alternatively, the "reserved" status may indicate that the compartment 8 may be used during the reservation time, and once the reservation time expires, the contents of the compartment 8, if any, must be removed. That is, the reservation time may be indicative of a time in which the use of, not just the reservation of, the compartment 8 is allocated. In some cases, this may result in the current status being additionally, or alternatively, updated to "available and return" or just "return" to indicate that the contents of the compartment 8 should be returned to the sender.

Referring back to Fig. 2A, the reservation table may also be provided with location data indicating a location of the compartment 8. In some cases, a shop system 2 may request the reservation of a compartment 8 based upon the location of the shop system 2, or corresponding shop/warehouse.

The location data may be communicated to the post system 1 at the time of indicating the number of compartments 8, or it may be communicated at a later stage. The location data can be communicated in a direct way; that is, the request from the shop system 2 can specify X compartments at Y location. In some situations, a range may also be associated with the location, i.e., within a range of 1 km of Y.

Alternatively, the location data can be communicated in association with a customer account. The customer account may be pre-register with the post system 1 and may be stored in the database 4 or another database. The customer account can be assigned a customer account number and various other information relating to the shop system 2 when a shop system 2 initially registers with the post system 1. For example, the customer account may include any financial information used to complete monetary transactions, some form of location data, and/or a distance range associated with the location data. In this case, when a shop system 2 interacts with the post system 1, an indication of the customer account, i.e., the customer account number, is sent to the post system 1, and the server 6 is adapted to search the database 4 on the basis of the location data.

As another alternative, the post system 1 may be adapted to identify the location of a shop system 2 on the basis of an IP address or some other form of unique identifier that contains location data. In other words, the shop system 2 sends a number of compartments to be reserved to the post system 1 from a personal computer, and the post system 1 is adapted to identify the shop system 2 via geolocating. In some cases, the IP address or a number of IP addresses may be used as the customer account identifier, and thus the shop system 2 may be automatically recognised by the post system 1 without specifying a customer account number or the like.

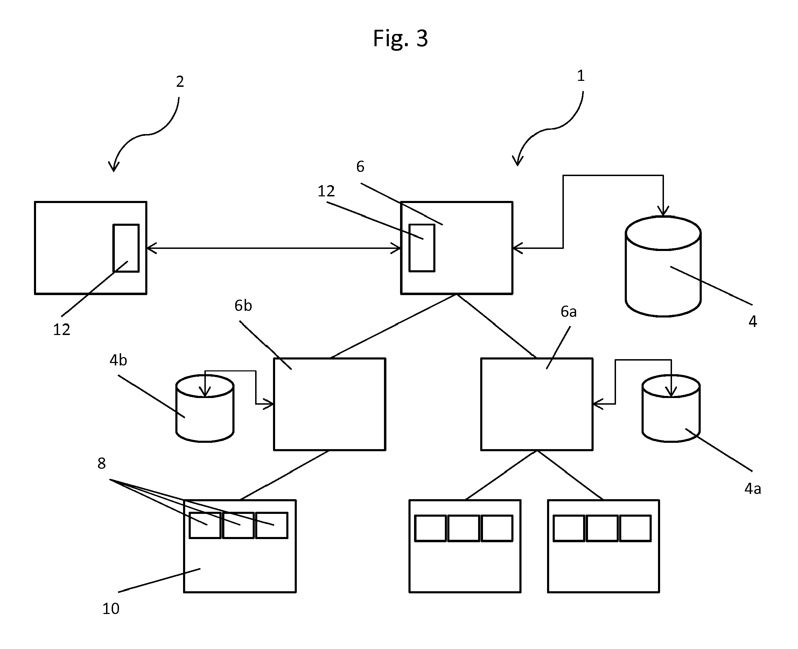

The post system 1 may employ several different configurations depending upon the requirements of the system. An exemplary arrangement is shown in Fig. 3, whereby the database 4 may include a plurality of local databases 4a, 4b. In some configurations, the server 6 may include a plurality of intermediate servers 6a, 6b.

In the arrangement shown in Fig. 3, an intermediate server 6a, 6b is provided to one or more of the post box terminals 10. In Fig. 3, intermediate server 6a is shown as being provided to two post box terminals 10, whereas intermediate server 6b is shown as being provided to one post box terminal 10. The number of post box terminals 10 provided to an intermediate server 6a, 6b is not limited to one or two, and may be any number larger than two, and may be different per intermediate server 6a, 6b. In Fig. 3, each intermediate server 6a, 6b, is provided with a local database 4a, 4b. The local database 4a, 4b may each store a reservation table associated with the compartments 8 of the post box terminals 10 that the intermediate servers 6a, 6b serve.

The local databases 4a, 4b and the intermediate servers 6a, 6b may be located at the post box terminal 10, or one of the post box terminals 10 that the intermediate server 6a, 6b serves. Alternatively, the local databases 4a, 4b and the intermediate servers 6a, 6b may be located at a remote location away from the post box terminal 10.

In one embodiment, the database 4 stores an identification table which correlates a post box terminal number or intermediate server number with a location of the post box terminal 10 or post box terminals 10. An exemplary layout of the identification table is shown in Fig. 2B. Correspondingly, each local database 4a, 4b may store a reservation table containing data indicating the current status of a local group of compartments 8. An exemplary layout of the reservation table in such an embodiment is shown in Fig. 2C. In Fig. 2C, the reservation time is shown as the end point of the reservation time, i.e., a time at which the reservation expires/ends, although the reservation time is not limited to this as discussed above.

In such an arrangement, the processing time and data storage capacity may be reduced. For example, a shop system 2 may communicate with the post system 1 and specify a number of compartments 8 to be reserved at a specified location. The server 6 of the post system 1 may then search the database 4 for an indication of the relevant post box terminal(s) 10 and associated intermediate server 6a, 6b. Thereafter, the server 6 may communicate with the intermediate servers 6a, 6b to provide an indication of the available compartments 8 or simply to reserve the available compartments 8. The intermediate servers 6a, 6b then search and update the local databases 4a, 4b accordingly.

Such hierarchical data relationships improve the speed at which data may be located in the post system 1. While one example of relational tables has been discussed, the invention is not limited to this and may employ any data hierarchy structure.

Alternatively, communications may be performed between the local databases 4a, 4b and the database 4, so as to store the data both centrally and locally. This ensures that the data is stored in a fail-safe manner. In some cases, the communication may be performed according to circuit switched data calls, thus avoiding collisions of data being sent between the databases 4, 4a, and 4b.

According to the present invention, the post system 1 is adapted to monitor the reservation table stored within the database 4 or local databases 4a, 4b, and compare the current time with the assigned reservation time. In other words, the post system 1 is adapted to identify a record of the database 4 that corresponds to a compartment 8 whose reservation time exceeds a current time, i.e., the reservation has expired.

Once found, the post system 1 is preferably adapted to update the record, and more specifically, the current status of the compartment 8 to "available". In this way, compartments that are reserved but are subsequently not used, i.e., do not have a package stored therein within the reservation time, are automatically made available to be used again.

Providing such a system ensures that the availability of the compartments 8 is performed with efficiency, and that compartments are always made available when possible.

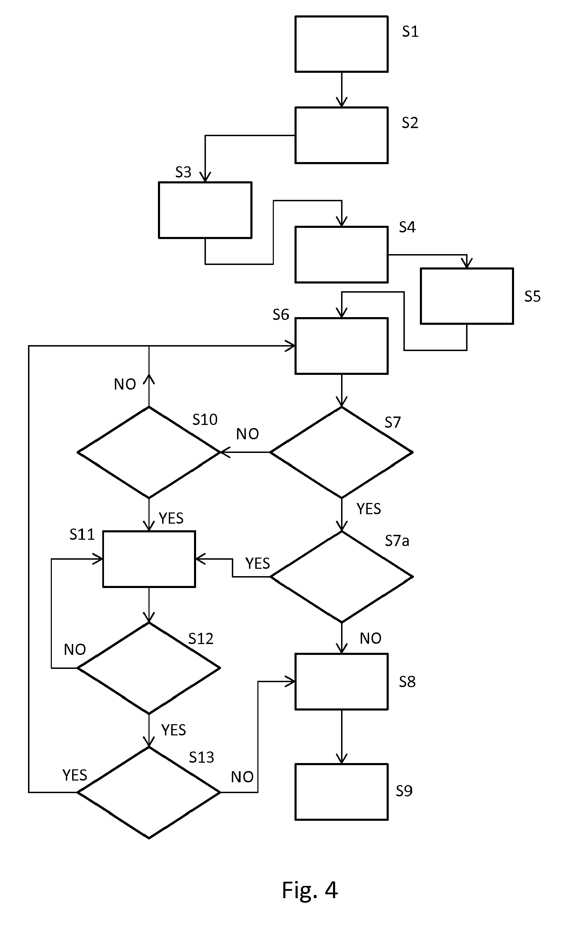

Fig. 4 shows an exemplary method employing the principles of the present invention. At step S1, a message is received at the post system 1 transmitted from the shop system 2. The message may contain any number of parameters and information depending upon the exact implementation used, but includes an indication of the number of compartments 8 to be reserved. The message may include, for example, X compartments to be reserved. Equally, the message may be X packages to be stored, in addition or alternative to the number of compartments 8. This may be more useful to the post system 1, particularly when an indication of the size of the packages is sent with the message. In this way, the post system 1 may be adapted to identify a combination of compartments 8 to accommodate the packages; in other words, the package to compartment ratio may not be a 1 : 1 ratio.

When the message is received, the post system 1 or server 6 is adapted to search the database 4 (step S2). The search parameters depend upon the content of the message sent from the shop system 2. In one embodiment, as a minimum requirement, the message contains the number of compartments 8 to be reserved. As discussed above, however, the message may contain a location data, number of packages, and/or a package size. Additionally, the message may contain a desired reservation time that the compartment 8 should be reserved until.

Once these parameters are identified, the post system 1 identifies available compartments 8 (step S3). The compartments 8 may preferentially be searched in order of location, i.e., a distance closest to the shop or warehouse is searched first, but this is not a necessity.

At step S4, the post system 1 sets appropriate available compartments 8 to reserved. In this regard, the post system 1 updates a record of the reservation table stored in the database 4 to reflect the reserved status of the compartment 8. At the same time, the post system 1 stores an indication of the reservation time within the reservation table. Once performed, the compartment 8 is then registered as "reserved" and, in subsequent reservation procedures or searches performed thereafter, appears as a reserved compartment 8. That is, the reserved compartment 8 is not identified by the post system in step S3.

Optionally, once a compartment 8 or several compartments 8 have been reserved, the post system 1 may communicate a message to the shop system 2 indicating which compartments 8 and/or which post box terminal 10 the compartment(s) 8 are reserved in (step S5). In some embodiments, this message may be transmitted to a computer of the shop system 2, or to a mobile phone or handheld device of the shop system 2 or employee of the shop system 2.

Once the reservation is made, the post system 1 compares the reservation time stored in the database 4 with a current time (step S6). The comparing could be performed continually or could be performed at intervals. For example, the post system 1 may be adapted to check the database 4 every five minutes. Preferably, the post system 1 is adapted to monitor only the compartments 8 that have been assigned the "reserved" status, thereby avoiding unnecessarily searching compartments 8 that are already available or already have a package stored therein.

At step S7, the current time is compared to a reservation time of a particular reserved compartment 8. If the reservation time has expired, i.e., the reservation time indicates a time prior to the current time, e.g., a time in the past, then the result of step S7 is YES, and the method may proceed to step S8, via optional step S7a, wherein the post system 1 updates the record associated with the reserved compartment 8. In this regard, the record is updated such that the current status of the compartment 8 is set to "available".

In some embodiments, the post system 1 may then communicate with the shop system 2 to inform the shop system 2 that the reservation has expired. This, preferably, includes providing a digital message to the shop system 2 which may also include a web-link or the like. The web-link may preferably include a link to the post system 1 and provides the option for the shop system 2 to either extend the reservation time on the current compartment 8 or an option to reserve a different compartment 8. This enables an easy re-reservation system to be employed whereby other data, i.e., location data, or identification data, does not need to be re-communicated to the post system 1.

On the other hand, if at step S7, the result is NO, i.e., the reservation time has not expired, then the method loops back to step S6 and the monitoring and comparing routine begins again.

In some embodiments, recognition means may be provided at the post box terminal 10 and/or compartments 8. The recognition means may be adapted to detect when a package is placed into the compartment 8, or when the compartment 8 is accessed. Provision of the recognition means enables the post system 1 to identify a "stored" status, and thus confirm that the reservation was met.

The recognition means may be any kind of device or system adapted to register a change associated with the compartment 8. In preferred embodiments, the compartments 8 or post box terminals 10 are provided with a user interface. When a person delivering a package to the post box terminal 10 wishes to gain access to a compartment, the person may be required to enter identification information via the user interface. The identification information may be any form of information, such as the customer account number discussed above, or any other form of personal data related to the person and/or shop system 2. Alternatively, the identification information can be sent from the post system 1 either when the reservation is made or when the person interacts with the user interface. In a preferred arrangement, the identification information includes a randomly generated code that is sent to a hand held device or mobile telephone of the person. When the code is input to the user interface, the recognition means register that the compartment is being accessed and subsequently provides a signal to the post system 1.

Alternatively, the recognition means may be a sensor or the like disposed in the compartment 8 itself or around a handle/lock portion of a door to the compartment 8. In a similar manner, the sensor may be adapted to detect actuation of the door or lock mechanism of the compartment 8. Alternatively, the sensor may be a pressure sensor or light sensor that detects when a package is inserted into the compartment 8, i.e., via a broken light beam or the like.

When the recognition means detects the presence of a package, the recognition means may send a signal to the post system 1. The post system 1 may process this signal one of two ways. In one way, the post system 1 may ignore the signal until the next routine search (step S6). This may result in the record of the compartment being updated from "reserved" to "stored" at the next routine search.

Alternatively, the signal may be ignored until the expiration of the reservation time. In this case, optional step S7a is provided such that, when the reservation time has expired, the post system 1 identifies if a signal has been received from the recognition means. If a signal has been received, YES at step S7a, the method proceeds to step S11 and the record is updated to "stored". If a signal has not been received, NO at step S7a, the method proceeds to step S8 and the record corresponding to the reserved compartment 8 is updated to "available".

As shown in Fig. 4, when the reservation time has not expired, step S7 indicates NO, the method may proceed to step S10 to check if a signal has been received from the recognition means.

If no signal is received (NO at step S10), the method proceeds back to the routine search of step S6. If, on the other hand, a signal has been received (YES at step S10), then the post system 1 may update the record of the reservation table corresponding to that compartment 8 to "stored" indicating that the recognition means has recognised that a package has been stored in the compartment 8 (step S11).

This method is also particularly appropriate for prolonged reservation periods where several packages may be deposited to and removed from the same compartment 8 during the reservation time. When a package is removed, the recognition means may also be adapted to provide a signal to the post system 1. When the "stored" status is assigned and the post system receives a signal from the recognition means, the post system 1 identifies that the package has since been removed, and the status may either be updated to "available" or "reserved" depending upon expiration of the reservation time.

At step S12, the post system 1 may also be adapted to routinely search the "stored" compartments 8, i.e., the compartments 8 with packages stored therein. When a signal is not received from the recognition means, the post system 1 identifies that the package remains in the compartment 8 (NO at step S12). In contrast, when a signal is received, or the signal changes, the package is removed from the compartment 8 (YES at step S12).

At step S13, the reservation time is then compared to the actual time, and if the reservation time is still valid, i.e., the reservation time is greater than the current time (YES at step S13), the record of the reservation table is set to "reserved" (step S14) and the method proceeds back to the routine search of step S6.

In contrast, if the reservation time has expired, i.e., the reservation time is less than the current time (NO at step S13), the method proceeds to step S8 and the record of the database 4 corresponding to the current status of the compartment 8 is set to "available".

In the alternative, the signals from the recognition means may be dealt with by the post system 1 when the signal arrives. In other words, waiting for the routine search to be performed may be disadvantageous, and the post system 1 may be adapted to update the reservation table immediately.

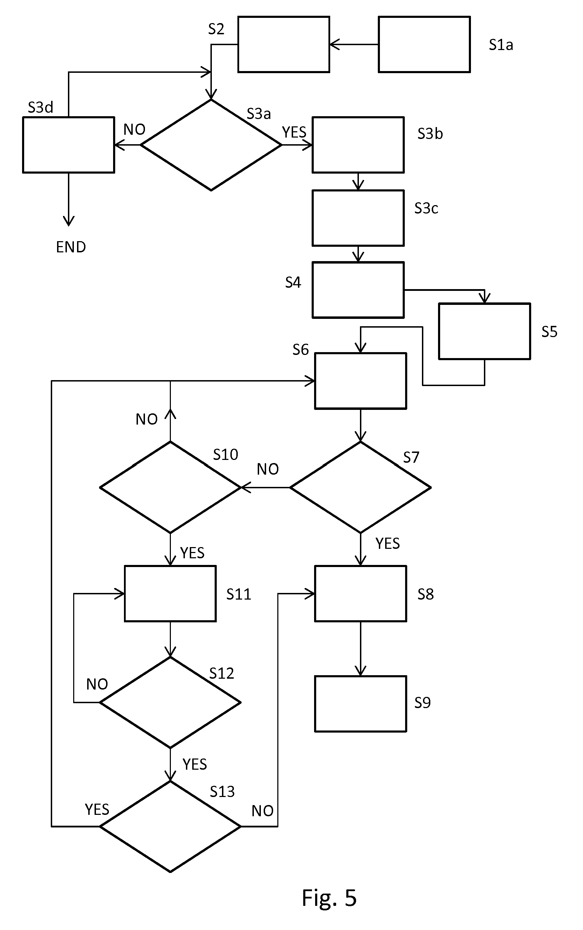

Fig. 5 shows a variation on the method of Fig. 4. In this variation, the shop system 2 is provided with the ability to select the desired compartments 8 to be reserved. At step S1a, the shop system 2 communicates a query message to the post system including that at least one compartment 8 is to be reserved and location data. In essence, step S1a differs from step S1 of Fig. 4 in that there is no information about the number of compartments 8 to be reserved at this stage, merely that a reservation is to be made. The location data may be provided in order to narrow the subsequent search and provide the shop system 2 with a manageable amount of data. This also reduces the required communication bandwidth and the storage space required at the shop system 2. Upon receiving the query message, the post system 1 searches the database 4 in a similar manner to step S2 of Fig. 4.

At step S3a, the post system 1 determines if there are any available compartments 8. This step involves identifying available compartments 8 within a distance range from the location specified by the location data. The range may be a predefined range that the post system 1 uses as a default value, or the range may be communicated from the shop system 2 as part of the query message.

If available compartments 8 within the range are identified (YES at step S3a), then the post system 1 is adapted to provide a list of available compartments 8 within the distance range to the shop system 2 (step S3b). Preferably, the list is prioritised on the basis of the distance from the location, such that closer available compartments 8 appear at the upper portion of the list.

At step S3c, the post system 1 receives reservation information from the shop system 2. The reservation information may indicate the selected compartments 8 from the list of compartments provided in step S3b. Accordingly, the post system 1 may update the record of the reservation table to "reserved" in much the same way as described in step S4 of Fig. 4. Indeed, the rest of the method may proceed in much the same way as described with reference to Fig. 4. However, step S5 may communicate a message to the shop system 2 only of a confirmation that the selected reserved compartments 8 were reserved, rather than an indication of which compartments 8.

In contrast, if there are no available compartments 8 at step S3a (NO at step S3a), the method proceeds to step S3d. At step S3d, the post system 1 may transmit a message to the shop system 2 indicating that no available compartments 8 within the distance range are available. Preferably, the message may also contain an option to update the search results, i.e., to enter a different location and/or a different distance range. In some cases, the message may also contain an indication of available compartments 8 within an extended distance range; that is, if no compartments are available within 1 km, the message may show available compartments within 2 km, for example. Additionally, or alternatively, the message may also contain an indication of reserved compartments 8 and their corresponding reservation time. This may allow an employee to check back at a later time, or the post system 1 may employ an alert system which could generate and send an alert when one of the reserved compartments 8 becomes available. In this case, the employee may be able to set a plurality of alerts for different compartments 8.

In both the embodiments depicted by Figs. 4 and 5, the specification of an actual compartment 8 that is reserved is not necessarily required. For example, an employee of the shop system 2 is not concerned if compartment A or compartment B of a specific post box terminal 10 is reserved. In a further embodiment, when information concerning the communication of compartments 8 to be reserved is communicated to the shop system 2 or received from the shop system 2, the post system 1 may reserve an arbitrary compartment 8 of the desired post box terminal 10.

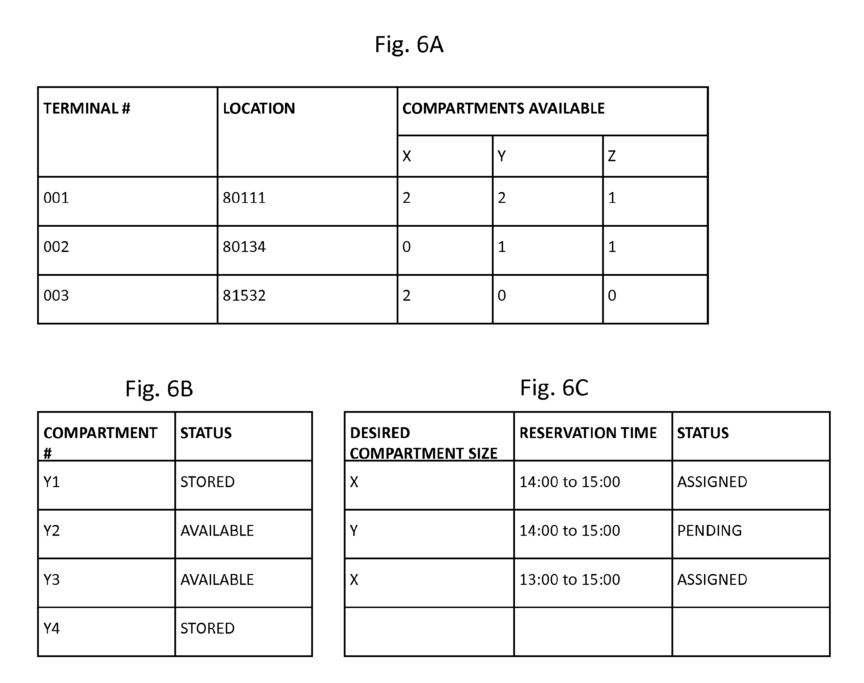

Fig. 6 shows one example of reservation tables associated with the embodiment described above. In Fig. 6A, a first table identifies the post box terminal number, location of the post box terminal, and the number of available compartments 8 and corresponding sizes thereof. For ease of discussion, X signifies a small size of the compartment, Y signifies a medium size, and Z signifies a large size compartment. It should be appreciated that any size compartment may be accommodated in such a method, and that compartments of X/Y/Z size may also include a range of compartment dimensions, i.e., the compartments 8 do not have to have identical dimensions in one size categorisation.

Fig. 6A shows a first terminal, 001, as having two X compartments, two Y compartments, and one Z compartment as available. Suppose that a request from a shop system 2 is sent for one Y-sized package to be deposited and terminal 001 is the closest terminal thereto.

Accordingly, because at least one Y-sized compartment or larger is available, a reservation is made. The reservation may be stored in a reservation pending table, as shown in Fig. 6C. To this end, Fig. 6B shows the current status of all compartments 8 in post box terminal 001. For simplicity, not all of the compartments 8 are shown, but for general understanding, all Y compartments of the exemplary post box terminal 001 are shown. In Fig. 6B, one can see that four Y compartments are provided, two of which have the status of "stored" and two of which have the status of "available".

Fig. 6C shows the pending reservations with associated desired compartment size, reservation time, and status. The reservation for the Y-sized package is the second entry in Fig. 6C. Because there are two available Y-sized compartments, and only one pending reservation, the reservation is not assigned and is still pending. That is, the reservation can be assigned to any of the available compartments 8 provided the compartment 8 can accommodate a package of that size.

In order for the reservation to be assigned, a number of criteria should be met. Essentially, for the reservation to be assigned, the number of available compartments 8 should equal the number of pending reservations. However, these criteria may also take into account compartments 8 of a larger size. For example, a Y-sized package may be accommodated in a Z-sized compartment. In Fig. 6A, the number of available compartments 8 that can accommodate a Y-sized package is three; two Y-sized compartments and one Z-sized compartment.

The advantage of such a system is now explained. The post box terminal 10 may be used with alternative means of depositing packages, i.e., a sender of a package may deposit a package without a reservation and simply arrive at the post box terminal 10. Assigning a reservation to a specific compartment 8 means that that compartment is subsequently not available. However, suppose two senders both deposit Y-shaped packages in the two available Y-sized compartments of post box terminal 001 before the employee of the shop system 2 deposits the reserved Y-sized package.

In this case, the two senders are able to place the two Y-sized packages in the two available Y-shaped compartments. Because the only available compartment 8 capable of receiving the reserved package is that of the Z-sized compartment, the reservation is assigned to the available Z-shaped compartment. Accordingly, no Y-sized or Z-sized compartments now appear as available, for example, in the table of Fig. 6A.

When the employee deposits the package in the reservation time as intended, no real advantage is gained; the three Y-sized packages occupy the two Y-sized compartments and the one Z-sized compartment. However, if the employee does not deposit the package within the reservation time, the Z-sized compartment is made available. Accordingly, a more effective use of space is provided at the post box terminal 001 as packages of the correct size are preferentially matched to their corresponding compartment size.

For means of comparison, suppose the reservation is assigned directly to a Y-sized compartment, then when the two senders arrive to deposit the Y-sized packages, one is deposited in the Y-sized compartment and one is deposited in the Z-sized compartment. Again, if the employee does not deposit the package within the reservation time, the reservation expires. However, it is only the Y-sized compartment that is made available in such a situation, and the extra space in the Z-compartment is lost due to a Y-sized package being deposited therein. Moreover, when the post system 1 is performing a search to identify available compartments 8, post box terminal 001 is only considered for Y-sized packages, and not Z-sized packages as well in such a situation.

In essence, the above embodiment ensures an effective space management of the compartments 8 at a post box terminal 10, while also guaranteeing the reservation of a compartment 8. Such a system provides an improved level of flexibility when storing packages.

In another scenario, suppose the reservation is assigned to the Z-sized compartment 8 and before the employee of the shop system 2 can deposit the Y-sized package, a Y-sized compartment becomes available. Thus, the reservation may be shifted accordingly, allowing a large compartment to not be inappropriately used and thus waste the space thereof.

In all of the methods discussed above, once a package is successfully placed within a reserved compartment 8, the post system 1 may be adapted to notify a courier. The courier may be notified immediately, i.e., when the package is detected as being stored, or may be notified at the end of certain time intervals. For example, the post system 1 may be adapted to catalogue all changes from "reserved" to "stored" from a start of an interval to the end of an interval, and subsequently notify the courier at the end of the interval. This enables fewer messages to be transmitted to the courier and also more effective route planning by the courier. In addition, the post system 1 may also be adapted to notify all packages that are still stored at the end of the interval to the courier.

In some further embodiments, a corresponding label may be generated for the packages. The label may be generated at either the shop system 2, or the post box terminal 10 or compartment 8. The label may include identification information related to the package, for example, a number of scannable bar code. In addition, information regarding the reservation time and/or reserved compartment 8 or post box terminal 10 may also be provided on the label. In one arrangement, the post system 1 may be adapted to electronically generate the label on the basis of the information provided from the shop system 2 and the chosen reserved compartment 8. Accordingly, the label may be provided to the shop system 2 and subsequently printed and attached to the package. Once the employee arrives at the post box terminal 10, the employee may scan the bar code on the label, and this acts as the verification and also opens the compartment 8. Alternatively, the label may be printed at the post box terminal 10 when the employee arrives at the post box terminal and enters the identification information.

In one alternative embodiment, the reservation is made in conjunction with the payment of a deposit from, for example, an account belonging to the shop system 2 or employee of the shop system 2. When the reservation is confirmed, for example in steps S4 or S5 of Figs. 4 and 5, the post system 1 may debit an account by a prescribed amount. This amount may be pre-defined according to information related to the customer account discussed above. Alternatively, the post system 1 may provide a separate deposit payment routine that provides a different interface, for example, that allows a deposit to be paid via the sender entering payment details.

Once the deposit has been paid, the sender either completes the reservation by depositing the package into the reserved compartment 8, or the reservation time expires and the reservation is lost (step S7 of Fig. 4 or 5). In this sense, the deposit may be returned to the sender or shop system 2 when the package is located in the compartment 8. This may be performed one of two ways, either by the monetary value being credited to the account of the shop system 2 or sender, or by the value of the deposit being subtracted from the total cost of sending the package, i.e., courier cost, etc.

In one preferred embodiment, the post system 1 is provided with automatic deposit return means, which is adapted to automatically return the deposit to the shop system 2 or sender. In this regard, the automatic deposit return means may be linked to the database 4 or local databases 4a, 4b and is adapted to detect a change in the current status of a package in the reservation table. In one arrangement, the automatic deposit return means may be adapted to continually monitor the reservation table, which may also include an indication of which packages/records have a deposit associated therewith, and detect a change in the current status of the package from "reserved" to "stored". Alternatively, the automatic deposit return means may be directly linked to the recognition means and receive a signal indicative of a package being located in the compartment 8.

In the alternative, when a sender does not place a package within the compartment 8 within the reservation time, the deposit is effectively lost and claimed by the post system 1. This system guarantees that reservations are not made as a precautionary measure by one shop system 2, for example, as a charge is associated for the incorrect use. Of course, if the reservation time expires, a sender may still be permitted to deposit a package within a compartment 8, provided that a compartment 8 is available when the sender arrives at the post box terminal 8.

The above disclosure provides a system and method for the reservation of compartments 8 adapted to receive packages. Moreover, the above provides a system able to rapidly manage reservations of compartments 8, particularly when the compartment 8 is not used during the reservation time, thus enabling the compartment 8 to be made available and for the compartment 8 to be presented to a potential customer rapidly.

### Reference numerals

- 1: Post system
- 2: Shop system
- 4: Database
- 4a, 4b: Local database
- 6: Server
- 6a, 6b: Intermediate server
- 8: Compartments
- 10: Post box terminal
- 12: Communication module

## Claims

1. A method for reserving one or more compartments (8) of a post system (1), the method comprising:
storing, in a database (4) of the post system (1), a reservation table with data indicating statuses of a plurality of compartments (8);
receiving reservation information, the reservation information indicating a number of compartments (8) to be reserved;
identifying at least one available compartment (8) to be reserved using the reservation table;
updating the reservation table by storing data indicating a reserved status associated with the at least one available compartment (8) to be reserved and a reservation time to establish a compartment reservation; and
identifying at least one record within the reservation table associated with a reserved compartment (8) having a reservation time that is past a current time, and updating the record of the reservation table corresponding to the identified reserved compartment (8) to available.

2. The method according to claim 1, further comprising receiving identification information at the reserved compartment (8), the identification information associated with a customer, and comparing the received identification information with pre-stored identification information, and allowing access to the reserved compartment if the received identification information matches the pre-stored identification information.

3. The method according to any of the preceding claims, wherein the identifying at least one record further includes comparing the reservation time with the current time and data from a recognition means, the recognition means provided at the one or more compartments (8) and adapted to recognise if a package is deposited in a compartment (8), wherein the record corresponding to the reserved compartment (8) is updated to available if the recognition means do not detect that a package has been deposited in the reserved compartment (8) within the reservation time.

4. The method according to any of the preceding claims, in particular claim 3, wherein the identifying at least one record further includes comparing the reservation time with the current time and data from a/the recognition means, the recognition means provided at the one or more compartments (8) and adapted to recognise if a package is deposited in a compartment (8), wherein the record corresponding to the reserved compartment (8) is updated to stored if the recognition means detect that a package has been deposited in the reserved compartment (8) within the reservation time.

5. The method according to any of the preceding claims, wherein receiving the reservation information further includes receiving customer account information related to a customer account pre-registered with the post system (1), the customer account information including data related to at least one geographical location, and wherein the identifying at least one available compartment (8) to be reserved further includes identifying the at least one available compartment (8) on the basis of the geographical location.

6. The method according to any of the preceding claims, wherein receiving the reservation information further includes receiving a size of one or more packages to be stored in the compartments (8), wherein the identifying at least one available compartment (8) to be reserved further includes identifying at least one available compartment (8) on the basis of the size of the one or more packages.

7. The method according to any of the preceding claims, further including:
transmitting a prioritised list of available compartments (8) based upon a/the location data indicating at least one location of a/the shop or
warehouse received from a shop system (2),
wherein the reservation information includes an indication of a number of compartments (8) to be reserved from the list of prioritised available compartments (8), and preferably further including:
receiving a query message, the query message including the location data related to at least one location associated with the location of the shop and/or warehouse; and
transmitting the prioritised list of available compartments (8) in response to the query message.

8. The method according to any of the preceding claims, in particular claim 7, wherein a/the prioritised list of available compartments (8) is generated according to a predefined range from a/the location of a/the shop and/or warehouse, and if no compartment (8) is available within the predefined range, a message is transmitted indicating either; alternative available compartments (8) outside the predefined range, or an alternative reservation time at which compartments (8) within the predefined range are available.

9. The method according to any of the preceding claims, in particular claim 1, wherein the post system (1) further comprises at least one post box terminal (10) comprising a plurality of compartments (8), and wherein the updating the reservation table includes storing data indicating a reserved status associated with an arbitrary available compartment (8) of the plurality of compartments (8), such that any of the available compartments (8) of one post box terminal (10) may be assigned the compartment reservation.

10. The method according to any of the preceding claims, further including:
paying a deposit prior to updating the reservation table to indicate a reserved status;
updating the record of the reservation table corresponding to the identified reserved compartment (8) to stored if a package has been deposited in the reserved compartment (8) within the reservation time; and
automatically returning the deposit to an account belonging to a/the shop system (2) when the record of the reservation table corresponding to the identified reserved compartment (8) is updated to stored.

11. A post system (1) for reserving one or more compartments (8), in particular a system adapted to perform the method of any one of claims 1 to 10, the post system (1) comprising:
a database (4) adapted to store a reservation table including data indicating statuses of a plurality of compartments (8),
wherein the post system (1) in communication with the database (4) and
includes a plurality of compartments (8), the post system (1) adapted to receive reservation information indicating a number of compartments (8) to be reserved;
wherein the post system (1) is adapted to identify at least one available compartment (8) to be reserved using the reservation table stored at the database (4), and update the reservation table by storing data indicating a reserved status associated with the at least one available compartment (8) to be reserved and a reservation time to establish a compartment reservation; and
wherein the post system (1) adapted to identify at least one record within the reservation table of the database (4) associated with a reserved compartment (8) having a reservation time that is past a current time, and to update the record of the reservation table corresponding to the identified reserved compartment (8) to available.

12. The post system (1) according to claim 11, wherein the plurality of compartments (8) is adapted to receive identification information, the identification information associated with a customer, and enable access to the compartment (8) if the received identification information matches pre-stored identification information.

13. The post system (1) according to any of claims 11 to 12, further comprising recognition means, the recognition means provided at the one or more compartments (8) and adapted to recognise if a package is deposited in a compartment (8), wherein the post system (1) is adapted to update the record corresponding to the reserved compartment (8) to available if the recognition means do not detect that a package has been deposited in the reserved compartment (8) within the reservation time.

14. The post system (1) according to any of claims 11 to 13, further comprising at least one post box terminal (10), each post box terminal (10) comprising a number of the one or more compartments (8), and wherein the database (4) comprises a plurality of local databases (4a, 4b) such that at least one or more post box terminals (10) are provided with a local database (4a, 4b), the local database (4a, 4b) storing a reservation table with data indicating statuses of the compartments (8) of the one or more post box terminals (10).

15. A computer readable device comprising instructions that, when executed, perform the method of any one of claims 1 to 10.
